# EUROPEAN PATENT APPLICATION

(11) **EP 0 525 318 A2**
(43) Date of publication of application: **03.02.1993**
(21) Application number: 92108498.4
(22) Date of filing: 20.05.1992
(51) Int. Cl.: G06F 15/70

(54) **Moving object tracking method**

(30) Priority: 23.05.1991 JP 147832/91
(71) Applicant: YOZAN INC., Tokyo 155 (JP); SHARP KABUSHIKI KAISHA, Osaka-shi Osaka 545 (JP)
(72) Inventor: Yamamoto, Makoto, c/o Yozan Inc., Setagaya-ku, Tokyo 155 (JP)
(74) Representative: Grünecker, Kinkeldey, Stockmair & Schwanhäusser Anwaltssozietät

(57) **Abstract**

The present invention has the object to provide a moving object tracking method for judging whether an object once in a motion comes to a standstill or not and whether it keeps regular movement or not without defining a background image.

The present invention comprises the following steps. i) An image within the predetermined area is input sequentially. ii) A moving object within the predetermined area in i) is extracted according to the change as time passes. iii) The representative point of each moving object is calculated sequentially and the next moving range of the representative point is expected. iv) It is judged that the moving object generates unsequential movement when the location of the representative point in the image input next is outside of the expected range.

## Description

### FIELD OF THE INVENTION

The present invention relates to a moving object tracking method, especially relates to a moving object tracking method for detecting a moving object in irregular motion in the groups of moving objects performing regular motion, that is, such an object in unsequential motion.

### BACKGROUND OF THE INVENTION

In many cases, the unusual motion of a moving object in a group of moving objects is found because of its unsequential motion. But a standstill of a moving object cannot be found by extracting the change of an image according to the calculation between images. Therefore, conventionally, tracking the object once in a motion, the object is judged whether it comes to a standstill or not, and whether it keeps regular motion or not with reference to the background image. However when the background image is adopted as a reference, the background image itself cannot be definite, for example, due to the change of the shadow of an object input as a background image. For that reason, it is impossible to judge the object correctly.

### SUMMARY OF THE INVENTION

The present invention is invented so as to solve the above problems of the prior art and has an object to provide a moving object tracking method for judging if an object once in a motion comes to a standstill or not and if it keeps regular motion or not, without defining the background image.

A moving object tracking method according to the present invention tracks the representative point of a moving object in a predetermined area.

### BRIEF DESCRIPTION OF THE DRAWINGS

Fig. 1 shows a block diagram of an embodiment of a moving object tracking system using moving object tracking method according to the present invention.
Fig. 2 shows a flow-chart for explaining the processing of the embodiment.
Fig. 3 conceptually shows expecting moving range in the embodiment.
Fig. 4 conceptually shows another expecting moving range.

### PREFERRED EMBODIMENT OF THE PRESENT INVENTION

Hereinafter, an embodiment of the moving object tracking method according to the present invention is described with reference to the attached drawings.

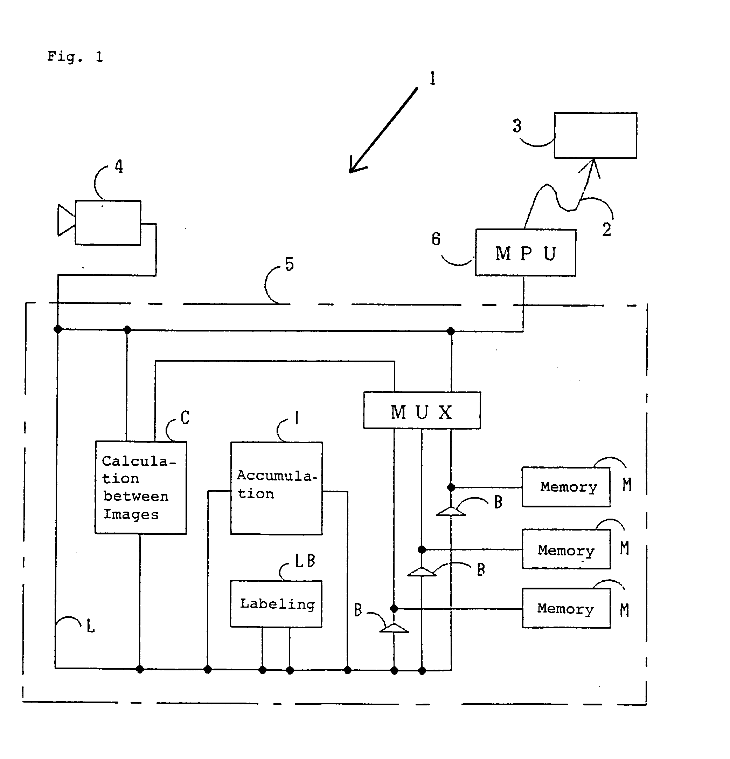

Fig. 1 shows a block diagram of a moving object tracking method using the present invention. Moving object tracking system 1 comprises central computer 3 connected by communication line 2, camera 4, image processing means 5 and MPU 6.

Image processing means 5 comprises memory M with a plural number of planes, to which camera 4 is connected through line L and buffer "B". An image from camera 4 is input to one of planes of memory M by the control of buffer "B". Each memory is connected to "C" of "means for calculation between images" through multiplexer MUX whose output is connected to memory M through line "L" commonable with the camera. Any 2 images can be selectively input to "C" of "means for calculation between images" by memory M. One of output of multiplexer is connected to the MPU and another is connected to line L commonable with camera 4.

Accumulational means "I" and labeling means "LB" are connected to line L, which perform many kinds of accumulation and labeling, respectively, on the output of memory "M".

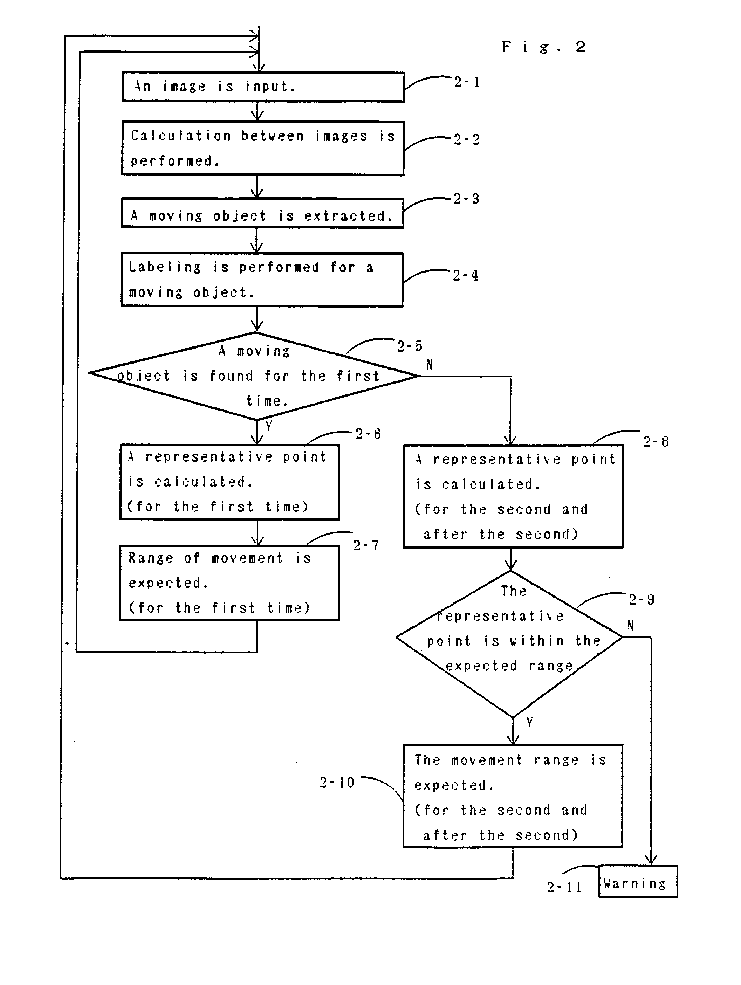

The moving object tracking system using the present invention with the above comprisals and structure works as shown in the flowchart in Fig. 2.

Camera 4 input an image in a predetermined area at predetermined intervals of 1/30 sec., for example, and stores it in memory M sequentially on step 2-1. Sequential 2 images are input to "C" of "means for calculation between images" and EX-OR between them is calculated on step 2-2. Consequently, unidentical part between them is calculated. Subtraction can be adopted for extracting the unidentical part. The output of the means for calculation between images is input to the memory except the memory stored the input image on step 2-3.

Each group in an image extracted in such a way is recognized as a moving object and classified into groups in labeling means LB. The image classified into groups is once stored in a memory on step 2-4.

Here, two cases are described: one is the case where a moving object is first found and the image of object is processed, and another is the case where the processing is performed after the object is found.

When a moving object is first found on step 2-5, the representative point is calculated on step 2-6. The center of gravity, the center of Feret's diameters, the coordinates of Feret's diameters of the predetermined position (upper left, for example) can be adopted as the representative point.

The representative points are calculated in accumulational means "I". The center of gravity can be calculated from the primary moment and an area, and the coordinates of Feret's diameters can be calculated by repeating the operations of MIN and MAX for the coordinates of pixels in each group. When the first representative point is calculated, next moving range is expected on step 2-7. The expectation of the range is performed in MPU and the expected range is recorded on memory M.

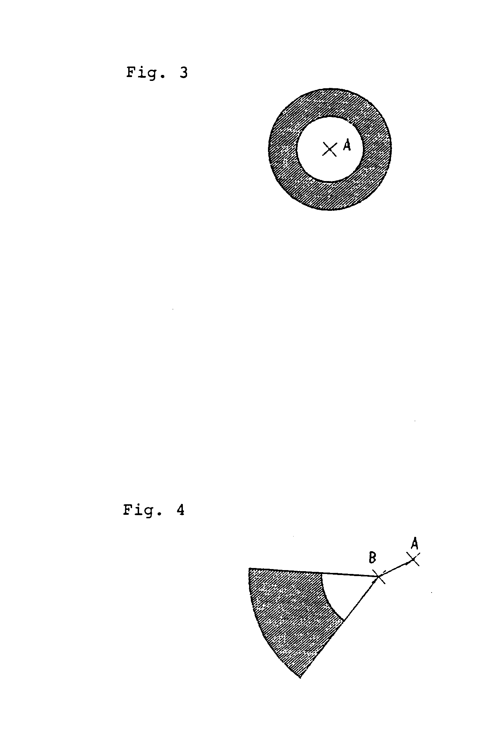

Fig. 3 conceptually shows the expecting moving range. When the first representative point is on the location of "A", the expecting range is the doughnut area centering the point "A". The representative points inside of the doughnut area (near "A") move little. Such point may come into the image when a fixed object is appearing intermittently or a high-speed object has rushed onto the point.

Since the outside of the area expected is the area where the object reaches at a speed more than the speed of the object, a representative point in the outside should be deemed as a point of another object. Therefore, at the second extraction of a representative point, only the representative point in the doughnut area is expected to be the same one as that extracted at first when a plural number of representative points exist in the area, one of them is adopted or the mean coordinate of them is adopted.

When the first processing for a representative point is completed, the processing from step 2-1 to 2-4 are repeated. Branching out into the second processing and the processings after the second on step 2-5, the representative point of a moving object is extracted on step 2-8. It is judged on step 2-9 whether the object processed on step 2-8 is the same one as the one extracted previously or not, that is, whether all the representative points exist within the previous expecting range.

The judgment is performed as follows. Inputting a representative point in the expecting area in the image, an isolated point exist or not is searched. The means for calculation between images performs OR operation between the image including the representative point and the image of expecting area, and logical judgment whether an isolated point is generated or not is executed. When an isolated point is generated, an indicative brightness is output.

The case where an isolated point is generated inside of the expecting area shows that the moving object comes to a standstill. The case where an isolated point is generated outside of the expecting area shows that the moving object makes a move by the speed faster than the predetermined speed. Here, the output of the means for calculation between images is always input to MPU. When an indicative brightness is generated, MPU works for informing the unexpected movement: it means that a warning is given, for example.

The area in Fig. 3 is the expecting area for the second extraction. For the third and the following extraction, the fan-shaped area shown in Fig. 4 is the expecting area. The area shown in Fig. 4 is defined by the previous representative point "A" and the present representative point "B".

Similar to the description above, the case where a representative point exists outside of the expecting area on step 2-9 shows the possibility of three cases: i) the moving object comes to a standstill, ii) it moves by the speed faster than the predetermined speed, and iii) it do not move in the predetermined direction. In such cases, a warning is given on step 2-11, branching from step 2-9. When all the representative points are within the expecting area, the next expecting area is calculated.

As mentioned above, it is possible to judge whether a moving object comes to a standstill or not and whether it keeps regular movement or not by tracking an object one in a motion without registering the background image.

## Claims

1. A moving object tracking method comprising steps: i) inputting an image within a predetermined area sequentially, ii) extracting a moving object within said predetermined area in i) according to change as times passes, iii) calculating a representative point of each moving object sequentially and expecting the next moving range of said representative point, iv) judging that said moving object generates unsequential movement when a location of said representative point in an image input next is outside of said expected range.

2. A moving object tracking method claimed in Claim 1, wherein a representative point is a center of gravity.

3. A moving object tracking method claimed in Claim 1, wherein a representative point is a center of Feret's diameters.

4. A moving object tracking method claimed in Claim 1, wherein a group outside of said expected area is recognized that it does not generates any change of said representative point, expecting a locus of movement of each group according to change caused by passing time.
